# EUROPÄISCHE PATENTSCHRIFT

(11) **EP 1 509 737 B1**
(45) Veröffentlichungstag und Bekanntmachung des Hinweises auf die Patenterteilung: **09.01.2008**
(21) Anmeldenummer: 04725675.5
(22) Anmeldetag: 05.04.2004
(51) Int. Cl.: F27D 15/02

(54) **Verfahren zum Kühlen von schüttfähigem Brenngut**
Process to cool combustion material in bulk
Procédé pour la refroidissement des matériaux combustibles en vrac

(30) Priorität: 08.05.2003 EP 03010386
(43) Veröffentlichungstag der Anmeldung: 02.03.2005
(73) Patentinhaber: Claudius Peters Technologies GmbH, 21614 Buxtehude (DE)
(72) Erfinder: MEYER, Hartmut, 21401 Thomasburg (DE); STAAK, Thomas, 22391 Hamburg (DE); WALLACE, Archibald, 20249 Hamburg (DE); WALLIS, Helmut, 24558 Henstedt-Ulzburg (DE)
(74) Vertreter: Glawe, Delfs, Moll
(86) Internationale Anmeldenummer: PCT/EP2004/003587
(87) Internationale Veröffentlichungsnummer: WO 2004/099693

(56) Entgegenhaltungen:
- WO-A-02/23112
- WO-A-02/075230
- DE-A- 10 018 142
- DE-A- 19 651 741
- DK-A- 9 901 403
- US-A- 2 240 590
- US-A- 4 144 963
- US-A- 5 482 155
- WALSH F.E.: "Advances in Reciprocating grate coolers" ZKG INTERNATIONAL, Bd. 47, Mai 1994 (1994-05), Seiten 252-256, walluf (DE)

## Beschreibung

Es ist bekannt, ein Schüttgutbett dadurch mit Gas zu behandeln, daß es kontinuierlich über einen Rost gefördert wird und dabei von dem Gas durchströmt wird. Zum Kühlen von Brenngut, beispielsweise Zementklinker, verwendet man vornehmlich sogenannte Schubroste, die aus einander überlappenden Reihen von wechselnd feststehenden und in Förderrichtung vor- und zurückbewegten Rostplatten bestehen (DE-A-3734043). Durch die Rostplatten wird Kühlluft in das Gutbett eingeblasen und oberhalb der Gutschicht zur Wärmerückgewinnung abgeführt. Schubroste verlangen für einen wirtschaftlichen Betrieb eine aufwendige Lagerung der bewegten Teile und sind auch wegen ihrer relativen Kleinteiligkeit aufwendig. Eine andere bekannte Rostbauart bedient sich eines stationären, luftdurchlässigen Tragbodens, über den die Gutschicht mittels kontinuierlich in Förderrichtung bewegter Kratzer oder hin- und hergehender Schuborgane bewegt wird (EP-A-718578, DE-A-10018142, WO98/48231). Die Kratzer oder Schuborgane müssen von unten durch die Rostfläche beweglich hindurch geführt werden, was aufwendig ist. Außerdem sind sie innerhalb der heißen Gutschicht hohem Verschleiß ausgesetzt. In demjenigen Rostbereich, in welchem sie und ihre Antriebs- und Dichtungsorgane sich befinden, ist der Luftdurchgang behindert und die Kühlwirkung eingeschränkt. Bei einer wieder anderen Kühlerbauart (DE-A-10113516 = WO2/075230) wird ein großflächiger Rost in seiner Gesamtheit vor- und zurückbewegt, wobei während des Rückhubs das Gutbett durch eine am Beginn des Rostes angeordnete, als Förderorgan oberhalb des Rosts auf die Schicht einwirkende Stauplatte festgehalten wird, so daß der Rost darunter zurückgleiten kann. Das hat den Nachteil, daß die nutzbare Rostlänge wegen der Begrenztheit der Stauwirkung begrenzt ist und deshalb mehrere Rostabschnitte mit zugeordneten Stauplatten hintereinander angeordnet werden müssen. Bei einem weiteren bekannten Kühler dieser Art (WO2/23112), sind die hintereinander angeordneten Rostabschnitte jeweils aus mehreren nebeneinander angeordneten Planken zusammengesetzt, die unabhängig voneinander angetrieben werden können, um durch unterschiedliche Fördergeschwindigkeit Unterschiede in der Höhe des Gutbetts über die Breite auszugleichen.

Schließlich ist eine Patentanmeldung für einen Brenngutkühler bekannt (DK 1999/1403 A), bei dem der von unten nach oben von Kühlgas durchströmte Rost mehrere in Förderrichtung langgestreckte Planken umfaßt, die in Förderrichtung hin- und zurückgehend derart angetrieben werden, daß wenigstens zwei benachbarte Planken gleichzeitig vor und ungleichzeitig zurück bewegt werden. Die Patentanmeldung stellt fest, daß der Wirkungsgrad dabei durch ein Kaltkanalproblem (Luftdurchbrüche durch die Schüttgutschicht) vermindert wird. Um dies zu vermeiden, sind vertikale Querwände auf den Planken des Rosts angeordnet, die sich mit den Planken vor und zurück bewegen. Das Gut soll dadurch in eine vertikale Mischbewegung versetzt werden.

Das Förderprinzip des DK 1999/1403 A ist im Stand der Technik (US 2240590 A, DE 19651741 A1, DE 296 087 B1, US-A-3 534 875, US-A-4 144 963, US-A-5222593, US-A-5482155) seit langer Zeit als "Walking Floor" bekannt Auf dem Gebiet der Fördertechnik spielt es keine große Rolle, weil es im allgemeinen einfacher ist, die Gutschicht mittels oberhalb der Stützfläche bewegter Kratzer oder Schuborgane zu bewegen. Im erfindungsgemäßen Zusammenhang stellt es hingegen einen besonderen Vorteil dar, daß oberhalb des Rosts keine Förderorgane vorhanden sind, die dort dem ggf. aggressiven Angriff der Behandlungsatmosphäre oder des Guts ausgesetzt wären.

Ausgehend von dem letztgenannten Stand der Technik liegt der Erfindung die Aufgabe zugrunde, ein Verfahren zu schaffen, das einen wirtschaftlichen Betrieb und insbesondere einen verbesserten Wärmerückgewinn verspricht.

Die erfindungsgemäße Lösung besteht in den Merkmalen des Anspruchs 1 sowie vorzugsweise denjenigen der Unteransprüche.

Die Erfindung verwendet einen Rost, der gemäß dem bekannten "Walking-Floor"-Prinzip aus mehreren in Förderrichtung langgestreckten Planken besteht. Mehrere dieser Planken werden in Förderrichtung vor- und zurückbewegt, um das Gut in Förderrichtung zu bewegen. Die Bewegung ist so gesteuert, daß jede einzelne Planke sich jeweils gemeinsam mit wenigstens einer benachbarten Planke in Förderrichtung vorbewegt und jeweils ungleichzeitig mit den benachbarten Planken zurückbewegt. Dabei ist die Breite der Planken so gering bemessen, daß während der Rückwärtsbewegung einer Planke die auf das darüberliegende Gut ausgeübte rückwärts-Förderwirkung, die auf der Reibung zwischen der betreffenden Planke und dem Gut beruht, geringer ist als die vorwärts-Förderwirkung oder Haltewirkung, die auf der Reibung beruht, die von dem jeweils benachbarten Gut bzw. von den Seitenwänden ausgeübt wird. Das hat die Folge, daß dann, wenn eine Planke sich zwischen zwei still stehenden Planken zurück bewegt, der über ihr liegende Gutstreifen von dem über den benachbarten Planken liegenden Gut großenteils oder vollständig festgehalten wird und er also insoweit nicht der einzeln zurück bewegten Planke folgt. Wenn sich zwei oder mehr benachbarte Planken mit dem darauf liegenden Gut gleichzeitig in Förderrichtung bewegen und eine einzelne Planke zwischen sich einschließen, die still steht oder sich entgegengesetzt bewegt, nehmen sie auch den auf dieser Planke liegenden Gutstreifen mit oder wenigstens einen wesentlichen Teil desselben. Durch geeignete Bewegungssteuerung, bei der der Rückhub jeder Planke so gesteuert ist, daß die benachbarten Planken das auf ihr liegende Gut festhalten, während der Vorwärtshub immer gleichzeitig von mehreren benachbarten Planken ausgeführt wird, wird das Gutbett in der Förderrichtung transportiert. Dabei ist die Betthöhe nicht geringer als des 0,7- fache des Plankenbreite. Die durch die Förderbewegung auf das Gutbett ausgeübte Mischwirkung ist gering. Insbesondere fehlt es an vertikaler Mischbewegung im Gutbett. Das hat zur Folge, daß das Behandlungsgas im Falle eines Kühlprozesses zuletzt die heißesten Schichten durchquert und dadurch die Schicht mit einer höheren Temperatur verläßt, als es bei lebhafterer vertikaler Durchmischung des Betts möglich ist. So wird ein besserer Wärmerückgewinn erreicht.

Die Erfindung schließt eine in manchen Fällen, beispielsweise zur Vermeidung des Zusammenbackens, erwünschte stärkere Gutbewegung nicht aus. Diese kann beispielsweise dadurch herbeigeführt werden, daß die Vorwärts förderung nicht gleichmäßig über die gesamte Rostbreite sondern abschnittsweise stattfindet, so daß zwischen den Abschnitten eine Relativbewegung erzeugt wird. Eine andere Möglichkeit, das Gut stärker zu bewegen, besteht darin, daß eine höhere Rostfrequenz gewählt wird. Schließlich kann durch stationäre, in das Bett hineinragende Einbauten eine Bewegung innerhalb des Gutbetts erzeugt werden.

Zweckmäßigerweise ist der Rückhub schneller als der Vorhub. Ferner kann es zweckmäßig sein, wenn sich ständig die Mehrzahl der Planken mit gleicher Geschwindigkeit in Förderrichtung bewegt. Dadurch läßt sich erreichen, daß sich die Gutschicht ständig mit im wesentlichen konstanter Geschwindigkeit bewegt, ohne daß durch Stillstand und Wiederanfahren Energieverluste oder störende Erschütterungen entstehen.

Bei einem Brenngutkühler kann es zweckmäßig sein, mindestens eine randnahe Planke mit geringerer Frequenz und/oder Amplitude als die weiter innen liegenden Planken zu bewegen, um dadurch zu verhindern, daß das Gut am Rand des Betts unerwünscht rasch fließt. Statt dessen oder zusätzlich können stationäre Randplanken vorgesehen sein. Auch die übrigen, bewegten Planken können hinsichtlich Frequenz und Amplitude unterschiedlich geregelt sein, damit unterschiedlichen Materialanforderungen über die Breite des Rosts Rechnung getragen werden kann. Je nach Art des dem Kühler vorgeschalteten Brennofens und des Ofenabwurfs besteht nämlich die Möglichkeit, daß die Eigenschaften des Guts über die Breite des Betts nicht gleich sind. Um trotzdem gleiche oder je nach den Umständen auch gezielt unterschiedliche Fördergeschwindigkeit zu erreichen, kann es deshalb erwünscht sein, daß die Förderbewegungen der Planken in einem Teil des Rosts intensiver sind als in einem anderen. Eine unterschiedliche Förderwirkung der Planken kann auch dadurch erzielt werden, daß einzelne von ihnen von Zeit zu Zeit am Hub der sonst gemeinsam mit ihnen bewegten Planken nicht teilnehmen. Beispielsweise kann vorgesehen sein, daß eine Planke nur an jedem zweiten Förderhub der benachbarten Planke teilnimmt oder daß bei ihr jeder siebte Förderhub ausfällt.

Schließlich besteht die Möglichkeit, in solchen Bereichen, in denen erfahrungsgemäß das Gut zu höherer Geschwindigkeit oder gar zum Durchschießen neigt, geeignete Bremsen anzubringen, die von stationären Hindernissen gebildet sind. Beispielsweise können zwischen benachbarten Planken stationäre Zwischenplanken vorgesehen werden, die gegebenenfalls auch mit in das Gutbett hineinragenden Strömungshindernissen versehen sind. Es können auch von den Seitenwänden her über den Rost ragende Einbauten angebracht werden, so daß der einheitliche Aufbau des Bodens durch Einbauten nicht gestört zu werden braucht. Die von der Seite her über den Rost ragenden Einbauten können eine Höhe haben die geringer ist als die normale Betthöhe, so daß sie ständig in das Bett eingreifen, um dessen Randbereiche an rascherer Strömung zu hindern. Wenn es nur darum geht, das Durchschießen von Material oberhalb des normalen Betts zu verhindern, wird ihre Höhe so gewählt, daß sie sich dort befinden, wo ein solches Durchschießen zu erwarten ist, also oberhalb der normalen Betthöhe.

Zweckmäßigerweise ist der Spalt zwischen benachbarten Planken gegen Rostdurchfall und/oder Gasdurchtritt abgedichtet. Für die Abdichtung wird vorzugsweise eine Labyrinthdichtung verwendet, bei welcher eine Längsleiste, die an dem Rand der Planke befestigt ist, eintaucht in eine Schüttung des Guts, die von der benachbarten Planke oder einer besonderen Rinne gehalten wird. Es ist eine einfache Ausführung dieses Prinzips bekannt (US-A-5,222,593), bei welcher vom Rand der einen Planke eine Randleiste hochsteht, die von einer nach unten ragenden Randleiste der anderen Planke übergriffen wird. In diesem Fall befindet sich die Abdichtung aber im aggressiven Bereich des zu behandelnden Guts. Erfindungsgemäß bevorzugt wird deshalb eine Ausführung, bei welcher die Dichtanordnung unterhalb der Planken angeordnet ist. In diesem Fall ist am Rand der einen Planke oder gesondert stationär eine nach oben sich öffnende Längsrinne angeordnet, die im Betrieb eine Schüttung des Guts aufnimmt. Vom Rand der Planke ragt eine Längsleiste in diese Rinne und in die darin sich bildende Schüttung hinein. Gemeinsam bilden diese Teile eine Abdichtung gegen den Durchtritt von Schüttgut, das durch den zwischen den Planken befindlichen Spalt in die Rinne gelangt. Außerdem bildet die Anordnung eine Abdichtung oder wenigstens ein Strömungshindernis für Gas zwischen dem Rostunterraum und dem Rostoberraum. Ein begrenzter Gasdurchtritt kann erwünscht sein, damit die angestrebte Gasbehandlung im Gutbett auch oberhalb dieser Abdichteinrichtung stattfinden kann. Dafür wird es in vielen Fällen ausreichen, wenn eine Seite der nach oben offenen Rinne mit dem Rostunterraum verbunden ist.
Nach einem besonderen Merkmal der Erfindung ist die Abdichteinrichtung oder eine zwischen zwei benachbarten Planken befindliche, stationäre Zwischenplanke von einer stationären Wand getragen, die die Rostunterräume unter den benachbarten Planken voneinander trennt. Dadurch wird es möglich, das Gut, das auf benachbarten Planken liegt, unterschiedlich stark zu belüften.

Die vom Rand einer Planke in die Rinne hinabragende Leiste sollte während des Betriebs stets hinreichenden Abstand von den Rinnenwänden einhalten, damit nicht das Gut zwischen der Leiste und einer Rinnenwand zerquetscht wird. Dies kann man dadurch erreichen, daß der seitliche Abstand zwischen der Leiste und den Rinnenwänden größer ist als das seitliche Führungsspiel der Planken einschließlich etwaiger Wärmedehnung. Ferner kann es zu demselben Ziel zweckmäßig sein, daß der Spalt zwischen der Leistenunterkante und dem Rinnenboden kleiner ist als der Spalt zwischen der Leiste und der Rinnenwand.

Wenn die Rinne stationär vorgesehen ist, kann von jeder der beiden gegeneinander abzudichtenden Plankenränder eine Längsleiste in diese Rinne hinabragen. Es besteht aber auch die Möglichkeit, die Rinne mit dem Rand der einen Planke und die hinabragende Leiste mit dem Rand der anderen Planke zu verbinden.

Derjenige Teil der Rinne, der unmittelbar mit dem Plankenspalt in Verbindung steht, wird in der Regel vollständig mit Schüttgut gefüllt sein. Während der Relativbewegung der Leiste und der Rinne zueinander, wird auch etwas Schüttgut unter der Leiste zur anderen Seite durchtreten. Der vertikale Abstand zwischen der unteren Leistenkante und dem Rinnenboden sollte gering sein, damit dieser Übertritt des Guts gehemmt wird. Außerdem sollten die Rinnenwände hoch genug sein, um ein Überlaufen des Guts in den Rostunterraum sicher zu verhindern. Ein solcher Überlauf ist deshalb unwahrscheinlich, weil die Rinne sich ständig selbst entleert. Weil die Leisten benachbarter Planken sich gemeinsam vor und einzeln zurück bewegen, wird die in der Rinne befindliche Materialschüttung stärker in Förderrichtung als zurück bewegt und aus dem Rinnenende, das zu diesem Zweck offen sein sollte, herausgeschoben. Weil nicht befürchtet werden muß, daß das Material sich rückwärts bewegt, darf das hintere, dem Aufgabeende des Rosts benachbarte Ende der Rinne offen sein.

Es ist üblich, dem Rost eines Brenngutkühlers einen kurzen Rostabschnitt vorzuschalten, dessen Aufgabefläche für die unmittelbare Aufnahme des vom Ofen herabfallenden Guts besonders geeignet ist und der im folgenden als Aufgabeabschnitt bezeichnet wird. Die aufgabeseitigen Enden der Planken des erfindungsgemäßen Rostabschnitts bewegen sich während ihres Schubs mehr oder weniger weit unter den Aufgabeabschnitt. Für die Relativbewegung benötigen sie Spiel zwischen ihrer Oberseite und der Unterseite des Aufgabeabschnitts. Um zu vermeiden, daß kühle Luft aus dem überdruckbeaufschlagten Rostunterraum durch dieses Spiel in das Gutbett eintritt, ohne den Rost durchströmt und gekühlt zu haben, ist zweckmäßigerweise eine Dichtanordnung vorgesehen, in deren Bereich dieses Spiel verringert ist.

Zweckmäßigerweise ist die Oberseite des Rosts im wesentlichen vollflächig mit Mulden versehen, in denen sich abgekühltes Gut fängt und den unmittelbaren Kontakt des Rosts mit heißen Gutschichten verhindert. Auch die aufgabeseitigen Enden der Planken sind zweckmäßigerweise mit solchen Mulden ausgerüstet. Wenn sie unter den Aufgabeabschnitt des Kühlers fahren und dort nicht mehr vom Gutbett belastet ist, besteht die Gefahr, daß das von unten in die Mulden eindringende Behandlungsgas den Muldeninhalt oder wenigstens das Feingut herausbläst. Nach einem weiteren Merkmal der Erfindung ist deshalb vorgesehen, daß die Luftdurchtrittsöffnungen der Mulden von der Luftzufuhr abgesperrt sind, wenn sie sich unter dem Aufgabeabschnitt des Kühlers befinden.

Ein wichtiger Vorteil der Erfindung besteht darin, daß der Verschleiß des Rosts und seiner Lagerorgane seine Funktion nicht beeinträchtigt.

Die Lagerorgane können daher einfach gestaltet sein. Beispielsweise kann der Rost auf Rollen gelagert werden.

Die Erfindung wird im folgenden näher unter Bezugnahme der Zeichnung erläutert, die ein vorteilhaftes Ausführungsbeispiel veranschaulicht.

Es zeigen:
- Fig. 1: einen schematischen Längsschnitt durch einen Brenngutkühler,
- Fig. 2: schematische Teil-Draufsichten auf den Kühlrost einer ersten Ausführungsform in unterschiedlich Funktionsstadien,
- Fig. 3: Draufsichten entsprechend Fig. 2 auf eine zweite Ausführungsform,
- Fig. 4: einen Teil-Längsschnitt einer ersten Ausführungsform des Kühlers,
- Fig. 5: einen der Fig. 4 entsprechenden Längsschnitt einer zweiten Ausführungsform des Kühlers,
- Fig. 6: einen Querschnitt durch einen Kühler,
- Fig. 7: einen Teilschnitt durch eine Dichtungsanordnung in größerem Maßstab,
- Fig. 8 u. Fig. 9: weitere Ausführungsbeispiele von Dichtungsanordnungen,
- Fig. 10 u. Fig. 11: einen Querschnitt und eine isometrische Darstellung einer weiteren Ausführungsform,
- Fig. 12: eine weitere Bauform der Dichtung,
- Fig. 13: Einzelheiten der Abdichtung zwischen den Rostabschnitten, und
- Fig. 14: eine Variante zu Fig. 9.

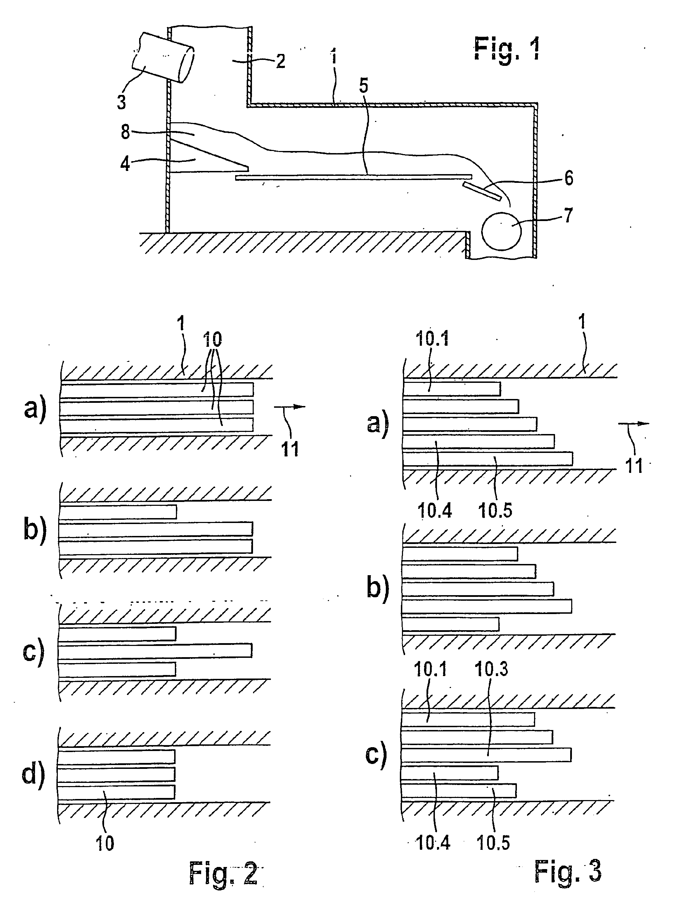

Gemäß Figur 1 bildet ein Kühlergehäuse 1 einen Aufgabeschacht 2, in welchem das Ende eines Drehrohrofens 3 mündet. Im Aufgabeschacht 2 fällt das Gut 8 auf einen Aufgabeabschnitt 4 des Kühlers und gelangt von dort auf den Rostabschnitt 5, der erfindungsgemäß betrieben ist. Wenn im folgenden ohne ergänzende Definition vom Rost die Rede ist, so ist dieser Rostabschnitt gemeint. Es soll nicht ausgeschlossen sein, daß diesem Rostabschnitt anders ausgebildete Rostabschnitte folgen oder vorgeschaltet sind. Der Rost 5 ist im wesentlichen horizontal angeordnet. Man kann ihn leicht abfallend anordnen, um dadurch den Widerstand zu erhöhen, durch den das Gut beim Zurückgehen einer Rostplanke daran gehindert wird, ihr zu folgenden. Hingegen wird die Gutbewegung in Förderrichtung erleichtert und der zur Förderung erforderliche Energieaufwand gesenkt. Der Rost 5 kann aber auch leicht ansteigend verlegt sein, wenn es darum geht, das gelegentliche Durchschießen von leicht fließendem Material ("Red River") zu verhindern. Am Ende des Rosts 5 kann das Gut unmittelbar oder über einen weiteren Rostabschnitt 6 abgeführt werden, beispielsweise zu einem Brecher 7.

Der Rost 5 setzt sich aus einer Mehrzahl parallel nebeneinander angeordneter Planken 10 zusammen. Beispiele mit drei bzw. fünf Planken sind in Fig. 2 und 3 schematisch dargestellt. Aufeinanderfolgende Funktionsphasen veranschaulichen darin die Bewegungsreihenfolge der Planken.

Fig. 2a stellt alle drei Planken 10 in ihrer in Förderrichtung 11 am weitesten vorgeschobenen Stellung dar. In dieser Stellung stoppt ihre Vorwärtsbewegung. Danach werden sie einzeln zurückgefahren, wie dies in den Darstellungen Fig. 2b, c und d dargestellt ist. Sobald sie alle die in Fig. 2d angegebene, am weitesten zurückgefahrene Stellung eingenommen haben, beginnen sie wieder mit dem gemeinsamen Vorschub, bis sie wieder die Stellung gemäß Fig. 2a erreicht haben. Während des gemeinsamen Vorschubs nehmen sie das auf ihnen liegende Gutbett mit. Wenn die Planken einzeln zurückgefahren werden, kann das auf Ihnen liegende Gut größtenteils nicht folgen, weil es durch die Reibung festgehalten wird, die von dem Gut, das auf den benachbarten Planken liegt, bzw. von den Seitenwänden darauf ausgeübt wird. Bei der in Fig. 2 dargestellten Bewegungsfolge wird vorausgesetzt, daß in derjenigen Bewegungsphase, in der die Planken einzeln zurückgefahren werden, die übrigen jeweils stillstehen.

Die in Fig. 3 dargestellte Bewegungsfolge beruht hingegen auf der Annahme, daß sämtliche Planken mit Ausnahme jeweils einer Planke, die zurückgefahren wird, sich gleichmäßig vorwärts bewegen. Fig. 3a stellt den Zustand dar, in welchem die Planke 10.1, die soeben zurückgezogen wurde, sich in ihrer hintersten Stellung befindet, während die Planke 10.5 ihre vorderste Stellung erreicht hat. In der Zeit bis zum nächsten Zustandsbild in Fig. 3b bewegen sich alle Planken 10.1 bis 10.4 langsam synchron vorwärts, während die Planke 10.5 sich in die hintere Ausgangsstellung zurückzieht. In der nächsten Phase bis zum Zustandsbild 3c wandern die Planken 10.1 bis 10.3 und 10.5 um einen Schritt vorwärts, während die Planke 10.4 sich in die hintere Ausgangsstellung zurückzieht, und so fort. Wenn die Vorwärtsbewegung kontinuierlich sein soll, muß die Rückzugsbewegung in diesem Beispiel mindestens fünfmal so rasch wie die Vorwärtsbewegung sein.

In den Beispielen der Fig. 2 und 3 wurde vorausgesetzt, daß sämtliche Planken gleiche Vorschubgeschwindigkeit haben. Dies ist nicht erforderlich. Vielmehr kann die Vorschubgeschwindigkeit der einzelnen Planken unterschiedlich geregelt sein oder von vornherein unterschiedlich festgelegt sein. Beispielsweise gibt es die bereits erwähnten technischen Gründe, die randnahen Planken 10.1 und 10.5 langsamer zu bewegen als die mittennäheren Planken.

Ferner wurde in den Beispielen vorausgesetzt, daß die Planken einzeln zurückgezogen werden. Doch ist es auch möglich, zwei Planken gleichzeitig zurückzuziehen, wenn sie hinreichende Entfernung voneinander haben und die übrigen Planken dazu ausreichen, das über den zurückzuziehenden Planken befindliche Gut festzuhalten. Beispielsweise könnte im Beispiel gemäß Fig. 3 vorgesehen sein, daß die Planken 10.1 und 10.4 einerseits sowie die Planken 10.2 und 10.5 andererseits je gleichzeitig zurückgezogen werden. Das gilt sowohl für die unter Bezugnahme auf Fig. 3 erläuterte kontinuierliche Arbeitsweise als auch für die unter Bezugnahme auf Fig. 2 erläuterte diskontinuierliche Arbeitsweise.

In Fig. 2 und 3 wurde einfachheitshalber vorausgesetzt, daß die Planken unmittelbar aneinander und an die Wände des Kühlergehäuses 1 grenzen. Dies ist nicht unbedingt erforderlich. Beispielsweise kann es bei fallend geneigter Anordnung des Rosts zweckmäßig sein, zwischen den einzelnen bewegten Planken stationäre Streifen oder Planken anzuordnen, die bremsend auf das Gut wirken, um ein Durchschießen zu verhindern. Ferner kann es bei horizontaler oder fallend geneigter Anordnung des Rosts sinnvoll sein, je einen unmittelbar an die Wände 1 grenzenden Randstreifen unbewegt zu halten.

Durch Einbauten kann der Widerstand, den das Gut bei einer Bewegung entgegen der Förderrichtung vorfindet, zusätzlich erhöht werden. Beispielsweise kann vorgesehen sein, daß der Abstand zwischen den Seitenwänden des Kühlergehäuses 1 oder zwischen zusätzlichen Einbauten sich entgegen der Förderrichtung 11 verjüngt.

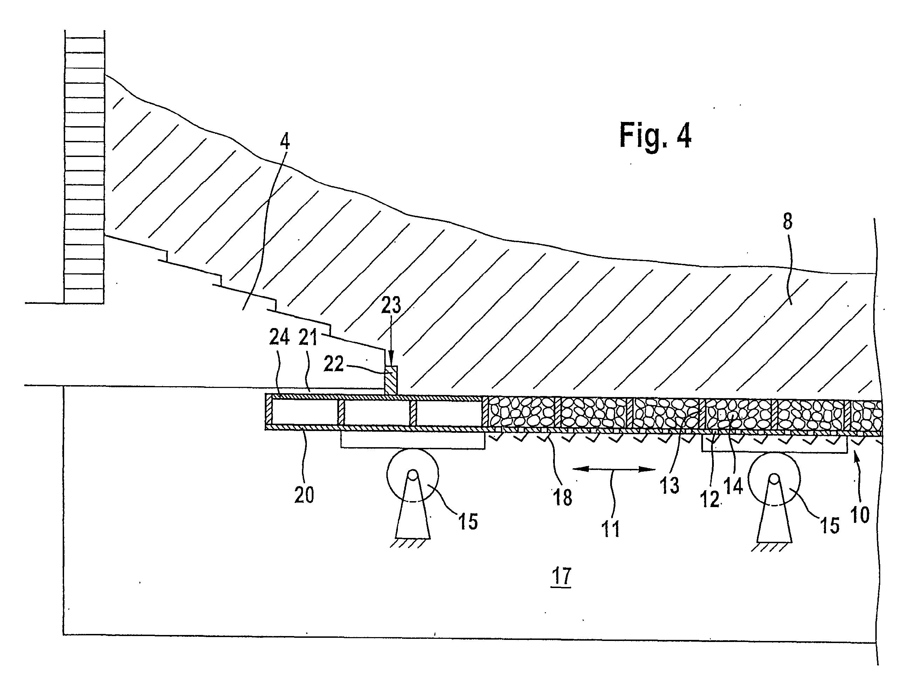

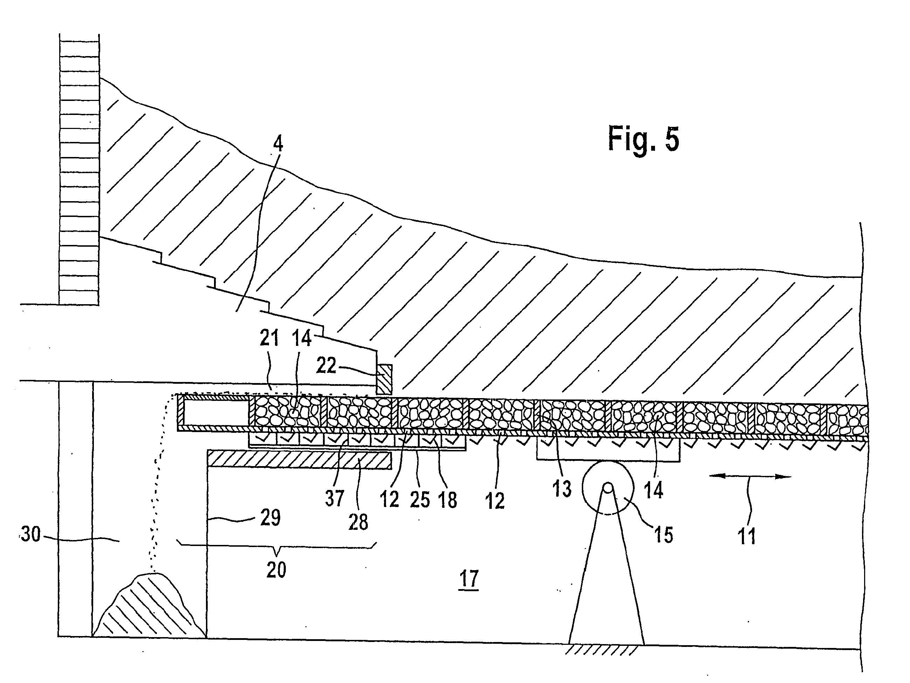

Die Planken 10 enthalten Luftdurchtrittsöffnungen 12 in möglichst gleichmäßiger Verteilung. Für ihre Ausbildung und Anordnung gelten die Erfahrungen, die von anderen Typen von Kühlrosten bekannt sind. Gemäß Fig. 4 und 5 sind auf der Plankenoberseite durch Querwände 13 Mulden 14 voneinander abgeteilt, die so bemessen sind, daß darin Schüttgut festgehalten wird. Dies bildet eine Schutzschicht gegenüber dem darüber befindlichen heißen und abrasiven Gutbett. Auch dies ist von anderen Kühlerbauarten bekannt.

Auf die Mulden 14 kann verzichtet werden, wenn das Gut weniger abrasiv ist oder wenn die Oberfläche der Planken 10 hinreichend verschleißfest ausgerüstet ist. Man kann auf diese Weise den Reibungskoeffizienten zwischen Rost und Gut beeinflussen. Dies kann auch in unterschiedlicher Weise über die Breite des Rosts geschehen, wenn man wünscht, daß das Gut in bestimmten Breitenbereichen stärker von der Reibung des benachbarten Guts als von der darunter befindlichen Planke beeinflußt wird.

In Fig. 4 und 5 ist vorausgesetzt, daß der Rostunterraum 17 mit Überdruck beaufschlagt wird und dadurch die Kühlluft vom Rostunterraum durch die Rostöffnungen 12 und durch das Gutbett 8 gedrückt wird. Damit etwa nach unten durch die Rostöffnungen 12 hindurchfallende Partikeln nicht in den Rostunterraum 17 gelangen, befinden sich unter den Öffnungen 12 bekannte Fangprofile 18, die den Rostdurchfall auffangen und ihm die Möglichkeit geben, durch die Luftströmung wieder nach oben in die Schüttung zurückgeführt zu werden.

Statt der Belüftung des Rosts durch Überdruck im Rostunterraum können die Planken auch insgesamt oder abschnittsweise über flexible Kanäle mit Druckluftquellen verbunden werden. Dies gibt die Möglichkeit, das Gutbett in unterschiedlichen Breiten- und Längenbereichen unterschiedlich zu belüften.

Die Planken 10 können auf Rollen 15 gelagert sein. Sie sind mit einem nicht dargestellten Antrieb verbunden, der es gestattet, sie in Förderrichtung 11 vorzuschieben und wieder zurückzuziehen.

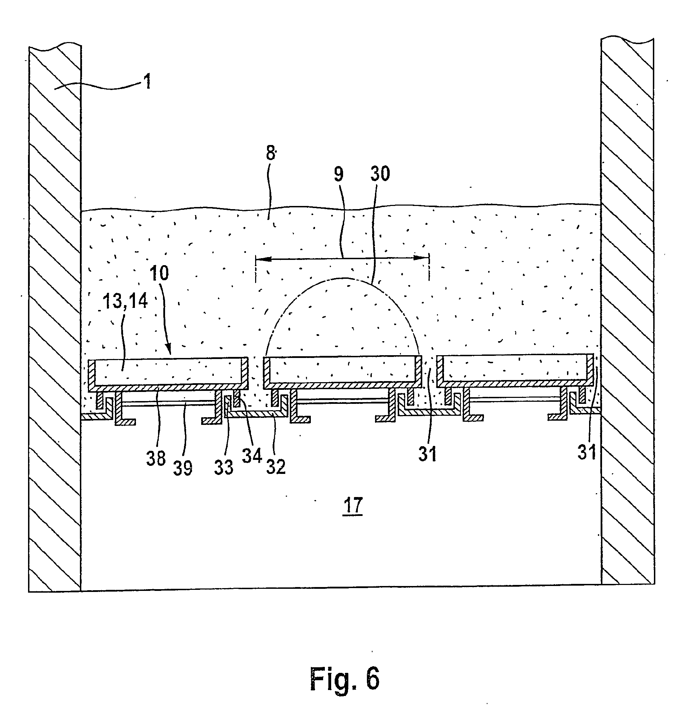

In der Schnittansicht von Fig. 6 erkennt man im Kühlergehäuse 1 den Querschnitt von drei Planken 10, deren Oberseite von den durch Wände 13 abgeteilten Mulden 14 gebildet ist und auf denen das Schüttgutbett 8 liegt. Bewegliche Bauteile sind von links unten nach rechts oben und feststehende von links oben nach rechts unten schraffiert. Die Breite 9 der einzelnen Planken ist so bemessen, daß die Bewegung des darüber liegenden Teils der Gutschicht 8 in Förderrichtung bzw. entgegen der Förderrichtung stärker durch die Reibung der benachbarten Gutbereiche bzw. der Wände 1 bestimmt wird, als durch die zugehörige Planke 10. Genauer betrachtet, läßt sich nicht verhindern, daß ein nahe der Plankenoberfläche befindlicher Gutbereich (etwa der Bereich unter der strichpunktierten Linie 30) an der Bewegung der Planke je nach Abstand von der Planke mehr oder weniger teilnimmt. Jedoch wird ein großer Teil des über der Planke befindlichen Guts an der Rückbewegung der Planke nicht teilnehmen, wenn die benachbarten Planken stillstehen oder in der Gegenrichtung bewegt werden.

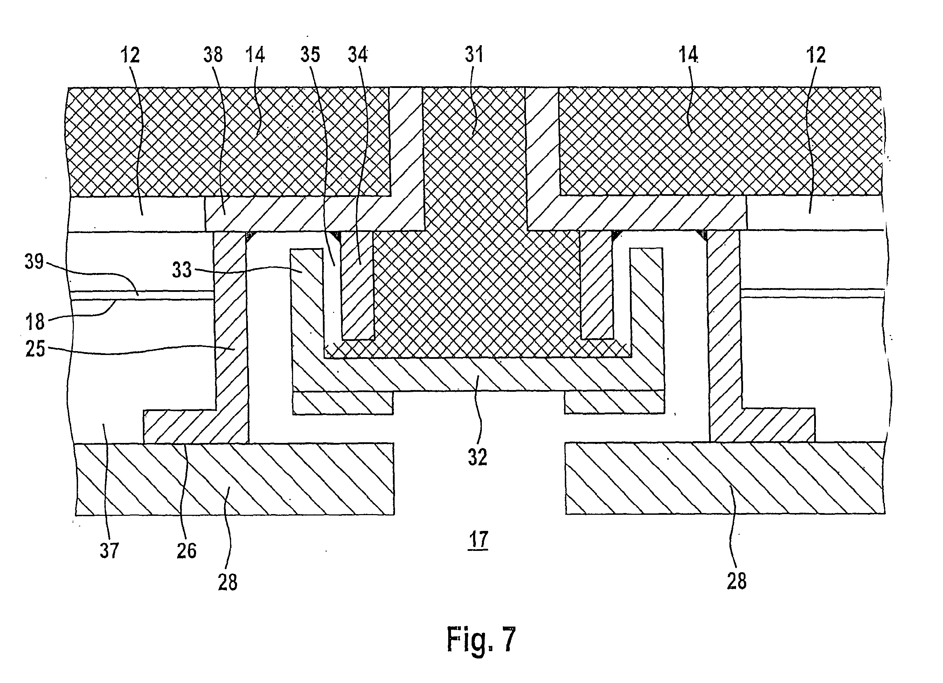

Je höher das Gutbett im Vergleich mit der Plankenbreite ist, um so größer ist der Einfluß der Reibung des benachbarten Guts bzw. der Kühlerwand auf das über der Planke liegende Gut im Vergleich mit dem von der Reibung der Planke herrührenden Einfluß. Die Fördereffizienz steigt also mit größer werdendem Verhältnis der Betthöhe zur Plankenbreite. Zweckmäßigerweise wird das Verfahren so betrieben, daß dieses Verhältnis nicht kleiner als 0,7, vorzugsweise nicht kleiner als 0,9 ist bzw. wird die Plankenbreite so gewählt, daß sie nicht größer ist als der Kehrwert dieser Zahl, bezogen auf die projektierte Betthöhe. Vorzugsweise liegt das Verhältnis von Betthöhe zu Plankenbreite im Bereich von 1 bis 1,2.
Zwischen den Planken 10 bzw. zwischen den randnahen Planken und der Wand 1 befindet sich ein Spalt 31, durch den Gut nach unten dringen kann. Unterhalb des Spalts 31 ist stationär eine Rinne 32 mit Wänden 33 angeordnet, die das durchfallende Gut aufnimmt. An den Planken 10 ist nahe deren Rand je eine nach unten ragende Leiste 34 angeordnet, die in die Rinne 32 taucht und deren Unterkante nur geringen Abstand vom Boden der Rinne 32 hat. Das in Fig. 7 durch Kreuzschraffur angedeutete Gut kann daher nicht widerstandslos in den Zwischenraum 35 zwischen den Rinnenwänden 33 und den Leisten 34 gelangen. Die beschriebene Anordnung stellt eine Dichtung gegen den Durchtritt von Gut durch den Rostunterraum 17 dar.

Von großer Bedeutung für die Dichtfunktion ist das Verhältnis zwischen dem Abstand, der zwischen der Unterkante der Leiste 34 und dem Boden der Rinne 32 gebildet ist, und der Höhe des Guts in dem Spalt 35 zwischen der Leiste 34 und der Wand 33 der Rinne 32. Die Höhe dieses Spalts ist zweckmäßigerweise 3 bis 20 mal so groß wie der genannte Abstand, weiter vorzugsweise etwa 8 bis 12 mal so groß. In einem bewährten Ausführungsbeispiel liegt der Abstand zwischen der Unterkante der Leiste 34 und dem Boden der Rinne 32 bei 2-5 mm und beträgt die Höhe der Wand 33 80 mm.

Falls der Widerstand, den das Gut beim Durchtritt dieser Dichtungsanordnung vorfindet, in speziellen Fällen nicht ausreichen sollte, kann die Rinne 32 durch Federkraft nach oben gedrückt werden, damit der Rinnenboden sich im wesentlichen spaltfrei gegen die Unterkante der Leisten 34 anlegt. Jedoch wird es dieser Maßnahme normalerweise nicht bedürfen, weil das durch den Spalt 31 in die Rinne 32 gelangende Gut ständig in Längsrichtung aus ihr herausgefördert wird. Das Förderprinzip bringt es mit sich, daß die Leisten 34 sich in der stationären Rinne 32 nie gleichzeitig entgegen der Förderrichtung, aber stets gleichzeitig in Förderrichtung bewegen. Dadurch ist der auf das in der Rinne 32 befindliche Gut ausgeübte Fördereffekt in Förderrichtung stärker als entgegen der Förderrichtung. Am abgabeseitigen Ende der Rinne 32 ist diese offen, so daß das Gut dort herausfallen kann. Falls sich je nach Anordnung des Rost und Art des Guts herausstellen sollte, daß auch am aufgabeseitigen Ende des Rosts Gut aus der Rinne 32 herausfällt, können dort geeignete Auffangmöglichkeiten (Raum 30) oder Dichtungen vorgesehen werden, die den Austritt verhindern. Aufgrund des Materialtransports in der Rinne in der Förderrichtung wird es dieser Maßnahme jedoch normalerweise nicht bedürfen.

Der seitliche Abstand zwischen den Wänden 33 und den Leisten 34 ist so gewählt, daß sie unter keinen Betriebsbedingungen aneinander berühren oder so nah kommen können, daß das zwischen ihnen befindliche Gut zermahlen wird. Ihr Abstand soll demgemäß größer sein als die zu erwartenden seitlichen Verlagerungen der Leiste 34 aufgrund des Bewegungsspiels der Planke und der Wärmedehnungen.

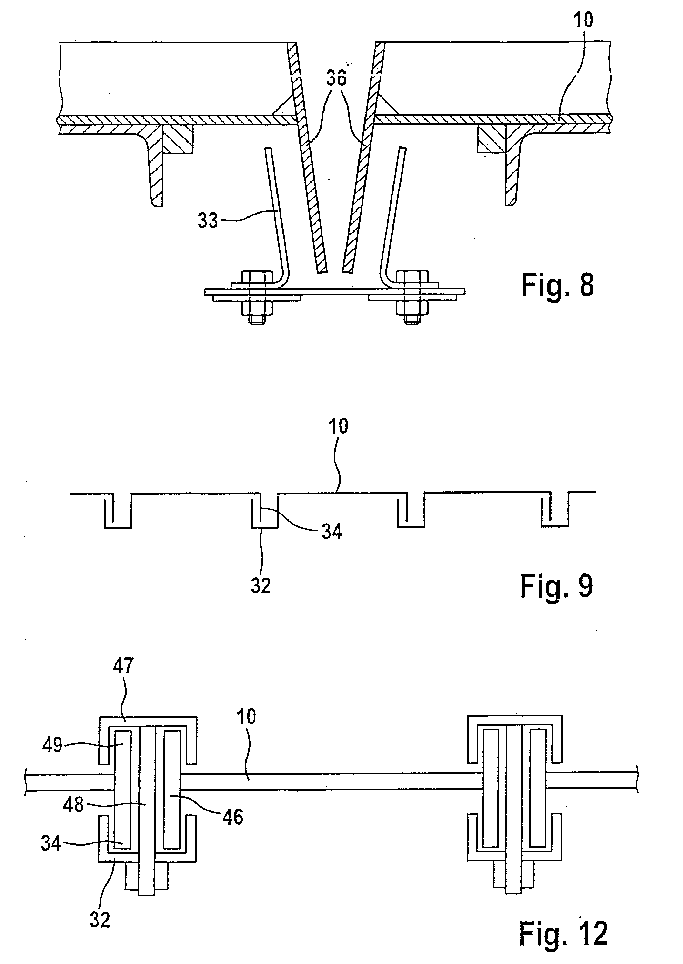

Die Gefahr des Zermahlens des Guts zwischen benachbarten Planken kann dadurch verringert werden, daß ihre einander gegenüberstehenden Seitenwände 36 gemäß dem in Fig. 8 dargestellten Beispiel einen keilförmig sich nach oben erweiternden Spalt einschließen. Dadurch wird verhindert, daß sich das Gut im Spalt verkeilen kann, was zu einem Abheben der Planken führen könnte.

Gemäß einem weiteren Ausführungsbeispiel, das in Fig. 9 gezeigt ist, ist die Leiste 34 am Rand einer Planke und die abdichtend damit zusammenwirkende Rinne 32 am Rand der benachbarten Planke unterhalb derselben angeordnet.

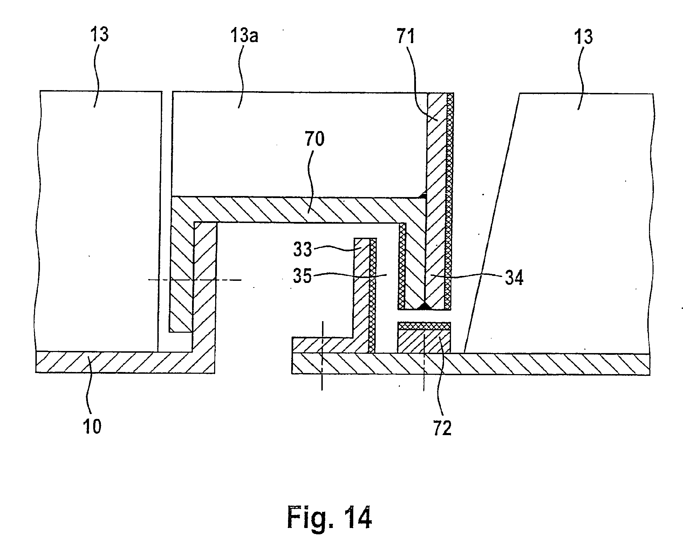

Ein wieder anderes Ausführungsbeispiel für die gegenseitige Abdichtung zwischen benachbarten Planken zeigt Fig. 14. Am Rand der in der Zeichnung links erscheinenden Platte 10 ist ein U-förmiges Profil 70 längs durchgehend befestigt, das eine Seitenwand 71 trägt. Diese Wand 71 begrenzt seitlich die Mulden (Ziffer 14 in Fig. 4 und 6), die durch Querstege 13 oberhalb der Planken 10 gebildet sind. Die Planken 13 werden oberhalb des U-Profils 70 durch 13a fortgesetzt.

Die Seitenwand 71 bildet einen nach unten ragenden Schenkel 34, der in das auf der (in der Zeichnung rechts) benachbarten Planke 10 gebildete Gutbett hinabragt und zur Bildung einer Labyrinthdichtung mit einer Wand 33 zusammenwirkt, die vom Rand dieser benachbarten Planke 10 hochragt. Die Wände 33, 34 schließen einen Spalt 35 ein und wirken in derselben Weise dichtend zusammen, wie dies oben unter Bezugnahme auf Fig. 7 erläutert wurde. Die kreuzschraffierten Flächen deuten eine O-berflächenpanzerung derjenigen Profilteile an, die infolge ihrer Relativbewegung zu den gegenüberstehenden Flächen bzw. Schüttungen einem erhöhten Verschleiß ausgesetzt sind. Aus demselben Grund ist unterhalb der Wand 34 ihrer Stirnfläche gegenüberliegend eine Leiste 72 vorgesehen, die mit der Stirnfläche der Wand 34 einen abdichtenden Spalt bildet und gleichfalls gepanzert ist. Derartige Panzerungen können auch bei den anderen Ausführungen der Abdichteinrichtungen vorgesehen sein.

Die Ausführung der Abdichteinrichtung gemäß Fig. 14 hat gegenüber manchen anderen oben erläuterten Abdichteinrichtungen den Vorteil, daß weniger relativ bewegte Dichtflächen einander gegenüberstehen und daher der Bauaufwand und die aufzuwendende Reibenergie geringer sind.

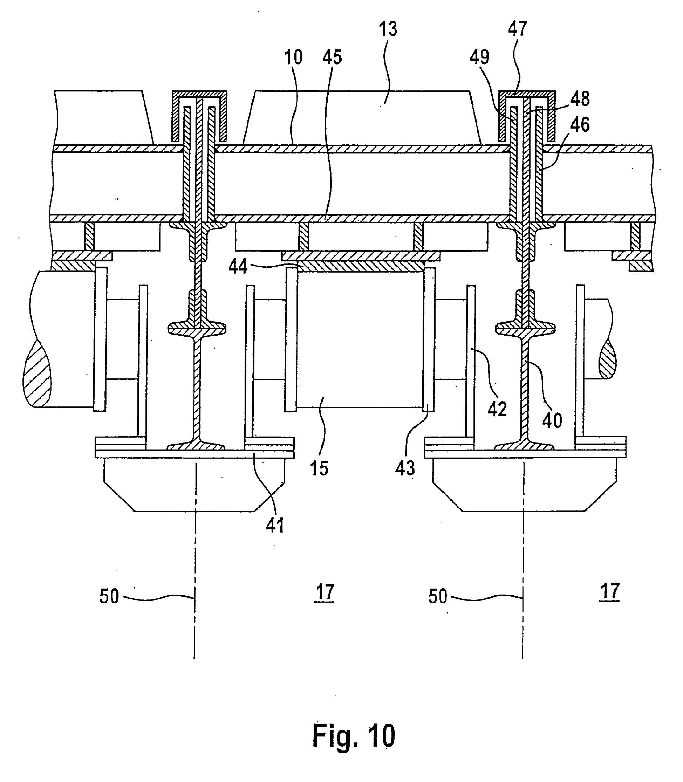

Einzelheiten einer für den praktischen Einsatz bevorzugten Konstruktion erkennt man in Fig. 10, 11, 13. Im Kühlergehäuse sind horizontale, parallele Längsträger 40 angeordnet, die den Rost tragen. In vorbestimmten Längsabständen sind daran Konsolen 41 befestigt, die jeweils. Lagerböcke 42 für Rollen 15 tragen. Auf den Rollen 15 ruhen Rollplatten 44, die über Querträger 45 mit Seitenwangen 46 der Planken 10 starr verbunden sind. Jede Planke 10 wird von mehreren hintereinander angeordneten Rollen 15 getragen. Mindestens eine von diesen ist hin-und hergehend angetrieben, um der Planke die weiter oben beschriebene Förderbewegung zu erteilen oder die Planken werden unmittelbar mit hydraulischen Kolben-Zylinder-Einrichtungen angetrieben. Es sind Einrichtungen zur seitlichen Führung der Planken vorgesehen, beispielsweise seitlich führende Spurkränze 43 an den Rollen 15, die zur Breite der Rollplatten 44 passen.

Auf den Planken 10 sind in vorbestimmtem Längsabstand Querwände 13 befestigt, zwischen denen sich die weiter oben erwähnten Mulden 14 bilden.

Die Abdichtung des Spalts zwischen benachbarten Planken 10 wird dadurch bewirkt, daß die über die Planken hochragenden Teile 49 der Seitenwangen 46 der Planken 10 von einem stationären, im Querschnitt umgekehrt U-förmigen Dichtprofil 47 übergriffen werden, dessen seitliche Schenkel Leisten bilden, die ähnlich den Leisten 34 im Ausführungsbeispiel gemäß Fig. 7 in das auf den Planken befindliche Gutbett eintauchen. Sie kooperieren hinsichtlich der Dichtwirkung mit den über die Planken 10 hochragenden Abschnitten 49 der Seitenwangen 46, deren Anordnung und Funktion den Wänden 33 des Ausführungsbeispiels gemäß Fig. 7 entspricht. Das Dichtprofil 47 wird von Halterungen 48 getragen, die zwischen den Planken 10 und deren benachbarten Seitenwangen 46 hindurch ragen und von den Längsträgern 40 getragen werden.

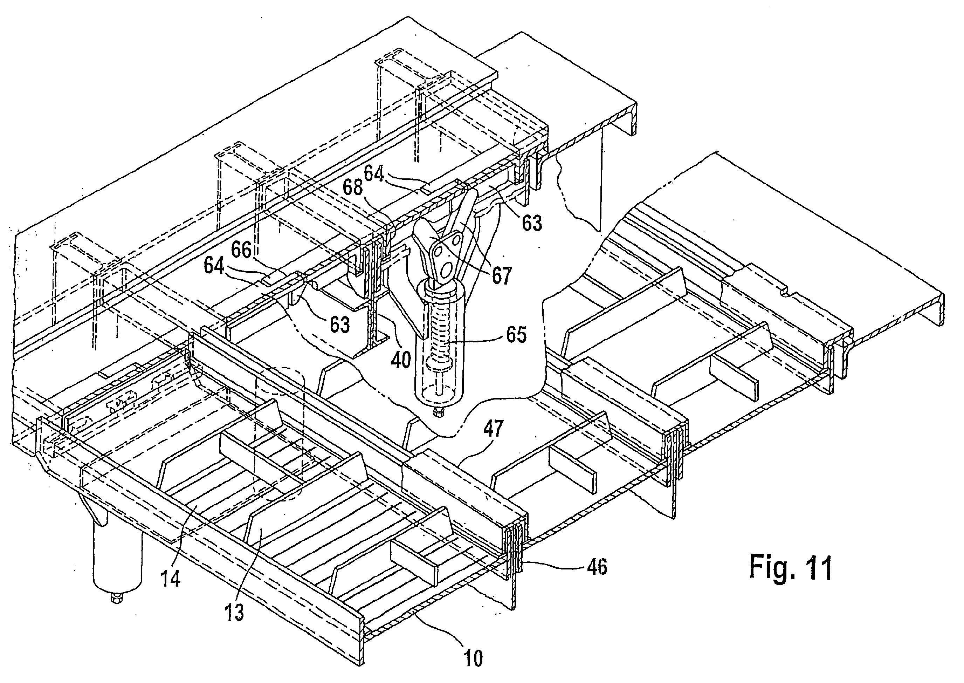

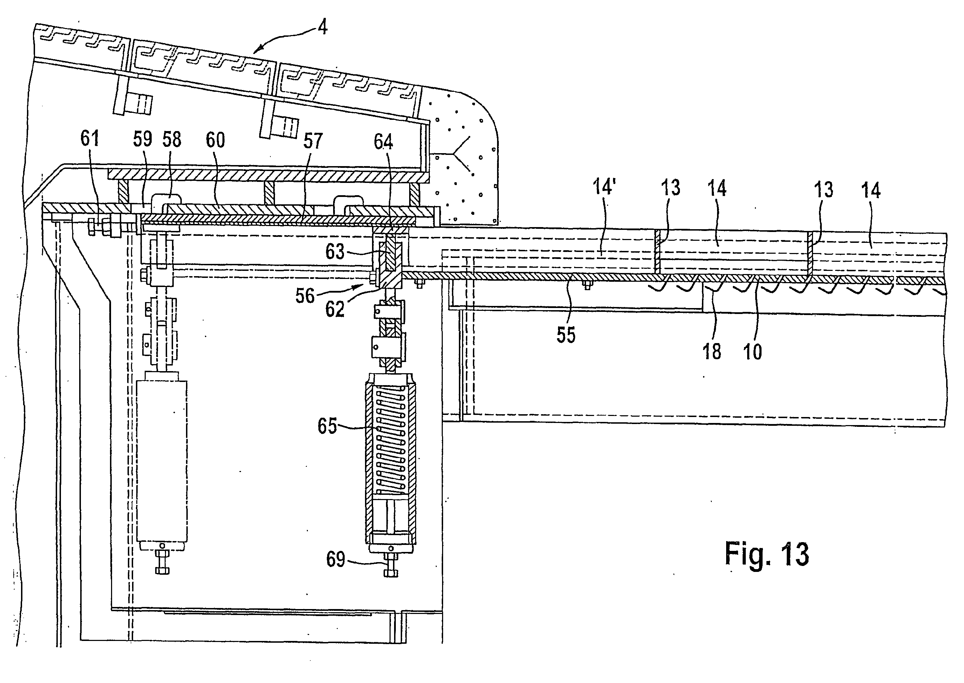

Die in Fig. 10 und 11 dargestellte oberseitige Abdichtung mittels des Dichtprofils 47 kann durch eine unterseitige Dichtanordnung der in Fig. 7 dargestellten Art ergänzt werden. Dies ist in Fig. 12 darge-stellt. Man erkennt, daß die Seitenwangen 46, die oberseitig mit dem soeben beschriebenen Dichtprofil 47 zur Bildung der oberseitig von den Planken 10 angeordneten Dichtung zusammenwirken, nach unten Leisten 34 bilden, die in eine unterseitig gelegene Rinne 32 eintauchen.

Bei der Betrachtung der Fig. 10 erkennt man, daß es leicht möglich ist, den Unterraum unter benachbarten Planken 10 durch strichpunktiert angedeutete Wände 50 voneinander zu trennen. Es wird dann auch die Halterung 48 wandartig durchgehend ausgeführt, so daß keine Strömungsverbindung zwischen den Unterräumen 17 benachbarter Planken 10 verbleibt. Man kann die getrennten Unterräume gewünschtenfalls mit unterschiedlichem Druck beaufschlagen, um unterschiedliche Kühlluftmengen durch die auf den zugehörigen Planken befindliche Gutschicht zu drücken. Falls auf benachbarten Planken das Gutbett unterschiedliche Eigenschaften hat, beispielsweise unterschiedliche durchschnittliche Korngröße oder unterschiedliche Betthöhe oder unterschiedliche Temperatur, so kann dem durch unterschiedliche Luftzufuhr Rechnung getragen werden. Zu diesem Zweck sind unterschiedlich einstellbare Kühlluftquellen für die getrennten Unterräume 17 vorgesehen. Für die erläuterte Trennung der Rostunterräume durch Längstrennwände ist der erfindungsgemäße Rost besonders geeignet, weil die Längstrennwände mit den zwischen benachbarten Planken in Längsrichtung durchgehenden Dichtungsorganen verbunden werden können. Auch Querwände lassen sich im Rostunterraum 17 leicht vorsehen, die es gestatten, in Förderrichtung aufeinanderfolgende Abschnitte unterschiedlich zu belüften.

Die Luftdurchtrittsöffnungen 12 im Boden 38 der Planken 10 sind in Fig. 7 als quer zur Längsrichtung verlaufende Schlitze erkennbar. Unter jedem Schlitz 12 befindet sich ein Fangprofil 18, dessen nach hinten gewandte Kante 39 in Fig. 7 erkennbar ist.

Wie in Fig. 1, 4 und 5 schematisch dargestellt ist, fahren die Enden 20 der Planken 10 unter den Aufgabeabschnitt 4 um lückenlos daran anzuschließen. Damit durch den Spalt 21 zwischen der Oberseite des Plankenteils 20 und der Unterseite des Aufgabeabschnitts 4 nicht die unter Überdruck stehende Luft aus dem Rostunterraum 17 hindurchströmt oder Gut entgegen der Förderrichtung 11 in den Rostunterraum 17 übertritt, ist eine Dichtleiste 22 vorgesehen, die in der Ausführungsvariante der Fig. 4 dicht an die Stirnfläche des vorgeordneten Rostabschnitts 4 anschließt und durch Federkraft 23 auf die Oberfläche 24 des Plankenendes 20 gepreßt wird. Damit die Dichtleiste 22 sich dicht auf die Oberseite 24 aufsetzen kann, ist diese in dem Plankenteil 20 durchgehend glatt und ohne Mulden 14 ausgeführt. Dies hat zur Folge, daß die Fläche 24, wenn sie sich nicht unterhalb des Aufgabeabschnitts 4 befindet, unmittelbar dem Verschleiß durch das noch sehr heiße Gut ausgesetzt ist und entsprechend temperatur- und verschleißfest ausgerüstet sein muß.

Will man diesen Aufwand vermeiden, kommt die Ausführungsalternative gemäß Fig. 5 in Betracht, die derjenigen gemäß Fig. 4 im wesentlichen gleicht bis auf die Tatsache, daß auch das Plankenende 20, soweit es während des Vorhubs dem heißen Gut ausgesetzt sein kann, mit oberseitigen Mulden 14 ausgestattet ist. In diesem Fall ist die Dichtleiste 22 fest montiert und endet ihre Unterkante in geringem Abstand oberhalb der die Mulden 14 einschließenden Wände 13.

Solange die Mulden 14 sich unterhalb des Aufgabeabschnitts 4 befinden, sollen sie von der Druckluftversorgung abgeschnitten sein, weil sonst die Gefahr besteht, daß ein Teil des in den Mulden 14 befindlichen Schüttguts, das für den Schutz der Planken erforderlich ist, ausgeblasen wird. Dazu dient die folgend unter Bezugnahme auf Fig. 5 und 7 beschriebene Anordnung. Zumindest im hinteren Teil 20 der Planken 10 sind die Fangprofile 18 durch Seitenwangen 25 eingefaßt. Darunter ist stationär eine Abschlußplatte 28 angeordnet, die sich in Förderrichtung 11 bis zum Ende des Aufgabeabschnitts 4 und in der Gegenrichtung bis zu einer Wand 29 erstreckt, durch die der Rostunterraum 17 nach hinten und zu den Seitenwänden hin abgeschlossen wird. Die Oberseite der Platte 28 ist gegen die unteren Stirnflächen 26 der Seitenwangen 25 abgedichtet, beispielsweise dadurch, daß die Platte 28 durch Federkraft gegen die Stirnflächen 26 gepreßt wird. Auf diese Weise wird der unmittelbare Zutritt von Überdruckluft aus dem Rostunterraum 17 zu den Luftdurchtrittsöffnungen 12 verhindert, sobald sich diese Luftdurchtrittsöffnungen bzw. die ihnen zugeordneten Fangprofile 18 hinter der Vorderkante der Platte 28 befinden. Um zu verhindern, daß Luft aus dem Rostunterraum entgegen der Förderrichtung zwischen der Oberseite der Platte 28 und den Fangprofilen 18 hindurch zu den Luftdurchtrittsöffnungen 12 strömt, sind zwischen aufeinander folgenden Fangprofilen 18 Querstege 37 vorgesehen, die bis zur Oberseite der Platte 28 hinabführen. Statt dessen kann auch vorgesehen sein, daß die Unterkanten der Fangprofile 18 abdichtend mit der Platte 28 zusammenwirken.

Für den Fall, daß Schüttgut in den Bereich unterhalb des Aufgabeabschnitts 4 gelangen sollte, kann dies außerhalb des überdruckbeaufschlagten Rostunterraums 17 in einem Sammelraum 30 (Fig. 5) aufgefangen und von dort von Zeit zu Zeit oder kontinuierlich abgesaugt werden.

Statt der durch die Platte 28 unterhalb des Rosts bewirkten Abdichtung ist es auch möglich, eine Abdeckung im Spalt 21 oberhalb des Rosts vorzusehen.

Eine weitere Möglichkeit des dichten Anschlusses des Rostabschnitts 5 an den Rostabschnitt 4 zeigen Fig. 11 und 13. Während die Planken 10 im Bereich der Mulden 14 luftdurchlässig mit Fangprofilen ausgeführt sind, wie es oben beschrieben wurde, ist das Plankenende im Bereich der Mulde 14' mit einem geschlossenen, nicht luftdurchlässigen Boden 55 ausgerüstet. Nur dieser nicht luftdurchlässige Abschnitt der Planke fährt unter den Rostabschnitt 4, so daß die Notwendigkeit entfällt, eine besondere Abschlußplatte (Nr. 28 in Fig. 5) vorzusehen, die den Luftdurchtritt hindert. Dieser nicht luftdurchlässige Abschnitt 55 der Planke wird durch das in der Mulde 14' gefangene Gut vor dem Einfluß der hohen Temperatur des vom Rostabschnitt 4 kommenden Guts geschützt.

Zum Abdichten des Rostabschnitts 5 gegenüber dem Rostabschnitt 4 ist eine Dichtanordnung vorgesehen, die einerseits unter dem Rostabschnitt 4 aus einer parallel zum Rostabschnitt 5 angeordneten Dichtplatte 57 und andererseits am hinteren Ende jeder Planke aus einer damit zusammenwirkenden Dichteinrichtung 56 besteht. Die Dichtplatte 57, bei der mit Verschleiß gerechnet werden muß, ist leicht auswechselbar mittels Haken 58 in Löcher 59 einer Tragplatte 60 eingehängt und wird mittels einer Schraube 61 in der eingehängten Position fixiert. Nach Lösen der Schraube 61 kann sie leicht herausgenommen und ausgetauscht werden. Die Dichteinrichtung 56 am hinteren Ende der Planke 10 bewegt sich mit der Planke zwischen zwei Extremstellungen, von denen die vorderste mit durchgezogenen Linien und die hinterste strichpunktiert in Figur 13 angedeutet ist.

Die Dichteinrichtung 56 umfaßt ein am hinteren Ende der luftundurchlässigen Platte 55 befestigtes U-Profil 62, zwischen dessen Schenkeln der Steg 63 eines T-Profils in einer quer zur Längsrichtung der Planke 10 liegenden Ebene beweglich geführt ist. Das T-Profil wird mit seinem Flansch 64 durch eine Feder 65 dichtend gegen die Dichtplatte 57 gedrückt.

Wie man am besten in Fig. 11 erkennt, ist das T-Profil 63, 64 in der Mitte geteilt. Die beiden Teile sind mit einem Z-Stoß 66 gefügt, damit auch dann kein materialdurchlässiger Spalt entsteht, wenn die beiden Teile sich seitlich auseinander bewegen. Beide Teile werden je für sich durch Schräglenker 67 derart von der Feder 65 beaufschlagt, daß sie nicht nur nach oben gegen die Dichtplatte 57 gepreßt werden, sondern auch seitlich nach außen. Dadurch werden ihre ebenfalls mit einem Flansch 68 versehenen Enden gegen die Außenflächen des oben unter Bezugnahme auf Fig. 10 beschriebenen U-Profils 47 gedrückt. So wird die Mulde 14' an ihrem hinteren Ende über ihren gesamten Querschnitt gegenüber den stationären Teilen 57 und 47 sowohl horizontal als auch vertikal abgedichtet. Diese Abdichtung bleibt in jeder Phase des Hubs erhalten, da die Dichteinrichtung 56 sich mit der Planke bewegt. Die Dichtkraft, mit welcher der Flansch 64 an den Dichtflächen der Platte 57 und des Profils 47 anliegt, wird durch die Feder 65 bestimmt. Deren Vorspannung kann durch die Verstellschraube 69 eingestellt werden.

Die in Fig. 11 dargestellte Ausführung setzt voraus, daß die Dichtspalte zwischen benachbarten Planken von einem nach unten offenen U-Profil 47 (siehe Erläuterungen zu Fig. 10) überdeckt sind. Gegen die Seitenflächen dieser U-Profile dichten die Enden der T-Profile 63, 64 ab. Wenn die Abdichtung zwischen benachbarten Planken so ausgeführt ist, wie es in Fig. 14 dargestellt ist, liegt das eine Ende des T-Profils 63, 64 an der Außenfläche der Wand 71, 34 der benachbarten Planke an und dichtet dort an. Am anderen Ende des T-Profils wird eine solche Abdichtung nicht benötigt.

Da die einzelnen Planken sich jeweils gesondert von den übrigen Planken bewegen, besteht die Möglichkeit, durch Änderung ihrer Hublänge oder Hubfrequenz ihren auf das Gut ausgeübten Fördereinfluß und damit die Fördergeschwindigkeit des auf ihnen befindlichen Guts gesondert von den übrigen Planken bzw. des darauf liegenden Guts einzustellen. Diese Tatsache wird erfindungsgemäß dadurch genutzt, daß die ausgewählten Eigenschaften des auf einer bestimmten Planke oder einer Gruppe von Planken liegenden Guts, die für die Bestimmung der Fördergeschwindigkeit wesentlich sein können, mittels geeigneter Sensoren gemessen werden und davon abhängig die Fördergeschwindigkeit der Planke (genauer gesagt: ihre Hubfrequenz oder ihre Hublänge oder beides) selbsttätig beeinflußt wird. Beispielsweise wird die Temperatur des auf einer Planke liegenden Gutbetts durch Strahlungsmessung der Gutbettoberfläche oder durch Messung der unmittelbar oberhalb dieses Betts herrschenden Temperatur der Kühlluft festgestellt oder es kann am Kühlerende mit Thermoelementen oder Pyrometern ein Temperaturprofil über die Rostbreite ermittelt werden. Es ist zweckmäßig, dabei pro Planke je eine Meßstelle zu verwenden.

Davon abhängig kann die Fördergeschwindigkeit der Planke ständig geregelt werden. Wenn die Temperatur anwächst, wird die Geschwindigkeit gesenkt, um die Aufenthaltszeit des Guts im Kühlbereich zu verlängern, bzw. umgekehrt. Statt einer ständigen Regelung besteht auch die Möglichkeit, periodisch die Geschwindigkeit zu senken, wenn eine Temperaturerhöhung festgestellt wird, und umgekehrt.

Es besteht auch die Möglichkeit, diese Verstellung oder Regelung der Fördergeschwindigkeit gezielt gegen bestimmte, unerwünschte Betriebszustände einzusetzen. Manches Gut neigt zur Bildung von Heißströmen, zum Beispiel randgängigen Feinklinkers ("Red River"), der durch Temperaturscanner lokalisiert und jeweils einzelnen Planken zugeordnet werden kann. Für die betreffenden Planken kann dann die Hublänge (oder die Hubfrequenz oder beides) regeltechnisch so lange reduziert werden, bis sich das Temperaturprofil über die Rostbreite ausgeglichen hat. Durch die Reduzierung der Hublänge in der heißeren Zone erhöht sich dort die Verweilzeit des Brennguts und wird dessen Kühlung daher intensiviert.

Man erkennt, daß dank der Erfindung beliebig lange Kühlroste realisiert werden können, wobei im Vorhub gegenüber dem Rost keine Reibverluste auftreten. Während des Rückhubs tritt zwar Reibung zwischen den im Rückhub befindlichen Planken und der darauf liegenden Schüttung auf; deren rückfördernder Einfluß ist aber gering. Daraus ergibt sich eine hohe Effizienz des Materialtransports. Die Abdichtung zwischen benachbarten Planken bzw. dem Gehäuse kann außerhalb des Heißbereichs untergebracht werden. Auch sind keine Förderelemente innerhalb des Heißbereichs erforderlich. Die bewegten Teile können durch gutfangende Mulden vor Verschleiß und Hitzeeinfluß weitgehend geschützt werden. Die Hublänge kann groß gewählt werden, beispielsweise zwischen 100 und 1000 mm, vorzugsweise zwischen 300 und 600 mm. Daraus ergibt sich eine niedrige Hubfrequenz und ein entsprechend geringer Verschleiß sowie eine geringe Beanspruchung der Antriebsorgane. Die Hublänge kann über die Kühlerbreite unterschiedlich eingestellt werden, um unterschiedliche Guteigenschaften quer über die Bettbreite zu berücksichtigen und insbesondere um Randgängigkeit des Klinkers ("Red River") zu vermeiden. Es kann eine gleichmäßige Luftbeaufschlagung über die Rostbreite erreicht werden, weil diejenigen Bereiche bekannter Roste, in denen die Luftzufuhr dort durch Dichtungs- oder Antriebselemente gesperrt ist, fehlen bzw. auf ein Mindestmaß reduziert werden können. Der Rostunterraum kann in Quer- und Längsrichtung durch Trennwände abgeteilt werden, so daß eine gezielte Belüftung, zum Beispiel des Randbereichs, auch ohne flexible Beluttungsleitungen möglich ist.

## Patentansprüche

1. Verfahren zum Kühlen des aus einem Brennofen austretenden Brennguts als Schüttgutschicht auf dem Förderrost eines dem Ofen nachgeschalteten Kühlers mittels eines von unten durch den Rost und die Schüttgutschicht hindurchgeführten Gasstroms, wobei der Rost mehrere in Förderrichtung langgestreckte Planken umfaßt, die in Förderrichtung vor- und zurückgehend angetrieben werden und von denen wenigstens zwei benachbarte Planken gleichzeitig vor und ungleichzeitig zurück bewegt werden wobei oberhalb des Rosts keine Förderorgane vorhanden sind **dadurch gekennzeichnet, daß** es an vertikaler Mischbewegung in der Schüttgutschicht fehlt und die Betthöhe im Mittel nicht geringer als das 0,7-Fache der Plankenbreite ist.

2. Verfahren nach Anspruch 1, **dadurch gekennzeichnet, daß** der Rückhub schneller als der Vorhub ist.

3. Verfahren nach einem der Ansprüche 1 oder 2, **dadurch gekennzeichnet, daß** mindestens eine randnahe Planke mit geringerer Frequenz und/oder Amplitude als eine andere Planke bewegt wird.

4. Verfahren nach einem der Ansprüche 1 bis 3, **gekennzeichnet durch** eine kontinuierliche Betriebsweise.

5. Verfahren nach einem der Ansprüche 1 bis 4, **dadurch gekennzeichnet, daß** Förderparameter für das auf einzelnen Planken oder einer Gruppe von benachbarten Planken liegende Gut gesondert gemessen und davon abhängig die Fördergeschwindigkeit dieser Planke oder Plankengruppe beeinflußt wird.

## Claims

1. Method for cooling the fired material which emerges from a firing furnace as a layer of bulk material on the conveying grate of a cooler connected downstream of the furnace by means of a gas stream which is passed through the grate and the layer of bulk material from below, the grate comprising a plurality of planks which are elongate in a conveying direction and are driven to and fro in the conveying direction, and of which at least two adjacent planks are moved forward simultaneously and are moved back non-simultaneously, there being no conveying members above the grate, **characterized in that** there is a lack of vertical mixing movement in the layer of bulk material and the bed height on average is no less than 0.7 times the plank width.

2. Method according to Claim 1, **characterized in that** the return stroke is faster than the advancing stroke.

3. Method according to one of Claims 1 and 2, **characterized in that** at least one plank which is close to the edge is moved at a lower frequency and/or amplitude than another plank.

4. Method according to one of Claims 1 to 3, **characterized by** continuous operation.

5. Method according to one of Claims 1 to 4,
**characterized in that** conveying parameters are measured separately for the material located on individual planks or a group of adjacent planks, and the conveying speed of this plank or group of planks is influenced as a function of these measurements.

## Revendications

1. Procédé de refroidissement de matières combustibles sortant d'un four et posées sous la forme d'une couche de matières en vrac sur la grille de transport d'un refroidisseur monté en aval du four, au moyen d'un flux de gaz acheminé depuis le bas à travers la grille et la couche de matières en vrac, la grille comportant plusieurs plaques allongées dans le sens de transport, qui sont actionnées dans le sens de transport vers l'avant et l'arrière et parmi lesquelles au moins deux plaques adjacentes sont déplacées en même temps vers l'avant et de manière décalée en temps vers l'arrière, aucun organe de transport n'étant prévu au-dessus de la grille, **caractérisé en ce qu'**il ne se produit pas de mouvement de brassage vertical dans la couche de matières en vrac et la hauteur du lit est en moyenne inférieure à 0,7 fois la largeur de la plaque.

2. Procédé selon la revendication 1, **caractérisé en ce que** le mouvement vers l'arrière est plus rapide que le mouvement vers l'avant.

3. Procédé selon la revendication 1 ou 2, **caractérisé en ce qu'**au moins une plaque proche du bord est déplacée avec une plus faible fréquence et/ou amplitude qu'une autre plaque.

4. Procédé selon l'une quelconque des revendications 1 à 3, **caractérisé par** un mode de fonctionnement continu.

5. Procédé selon l'une quelconque des revendications 1 à 4, **caractérisé en ce que** des paramètres de transport pour les matières posées sur les différentes plaques ou un groupe de plaques adjacentes sont mesurés séparément et la vitesse de transport de ces plaques ou de ce groupe de plaques est influencée en fonction de cette mesure.
